# EUROPÄISCHE PATENTSCHRIFT

(11) **EP 2 439 175 B1**
(45) Veröffentlichungstag und Bekanntmachung des Hinweises auf die Patenterteilung: **17.06.2015**
(21) Anmeldenummer: 11008048.8
(22) Anmeldetag: 05.10.2011
(51) Int. Cl.: C02F 1/02, C02F 1/72

(54) **Verfahren zur Ablaugeoxidation unter erhöhten Druck**
Method for waste lye oxidation under increased pressure
Procédé d'oxydation de lessive sous haute pression

(30) Priorität: 07.10.2010 DE 102010047726; 23.10.2010 DE 102010049445
(43) Veröffentlichungstag der Anmeldung: 11.04.2012
(73) Patentinhaber: Linde Aktiengesellschaft, 80331 München (DE)
(72) Erfinder: Rathsack, Timo, 85586 Poing (DE); Schmigalle, Holger, 82515 Wolfratshausen (DE); Zander, Hans-Jörg Dr., 81479 München (DE)
(74) Vertreter: Galander, Marcus

(56) Entgegenhaltungen:
- US-A- 4 350 599
- ELLIS C E: ENVIRONMENTAL PROGRESS, Bd. 17, Nr. 1, 1. Januar 1998 (1998-01-01) , Seiten 28-30, XP55016247, ISSN: 0278-4491, DOI: 10.1002/ep.670170116

## Beschreibung

Die Erfindung betrifft ein Verfahren zur Behandlung einer verbrauchten Ablauge aus einer Anlage zur Herstellung von Kohlenwasserstoffen mittels Spaltung eines kohlenwasserstoffhaltigen Einsatzes, wobei das Verfahren mindestens einen Schritt aufweist, bei dem die verbrauchte Ablauge unter erhöhter Temperatur bei überatmosphärischem Druck einer Oxidation mit Sauerstoff unterzogen wird, wobei das Verfahren zur Oxidation in einem Reaktor unter einem Druck zwischen 60 bar und 200 bar durchgeführt wird, und wobei der Druck der verbrauchten Ablauge in zwei getrennten Druckstufen auf den Druck der Oxidationsreaktion erhöht wird.

Olefine, wie Ethylen oder Propylen, werden mittels Spaltung eines kohlenwasserstoffhaltigen Einsatzes hergestellt. Die längerkettigen Kohlenwasserstoffe des Einsatzstoffes werden beispielsweise durch thermische Spaltung (Steam-Cracking) in kürzerkettige Kohlenwasserstoffe wie Ethylen und Propylen umgewandelt. Das durch die Spaltung entstehende Spaltgas wird abgekühlt, verdichtet und in einer anschließenden Laugewäsche von unerwünschten Bestandteilen wie Kohlendioxid, Schwefelwasserstoff und Mercaptanen befreit, bevor es in die einzelnen Kohlenwasserstoffe wie Ethylen und Propylen zerlegt wird.

Die in der Laugewäsche entstehende verbrauchte Ablauge muss vor der Einleitung in eine biologische Abwasserbehandlung von giftigen Bestandteilen befreit werden. Ebenso muss der chemische Sauerstoffbedarf der verbrauchten Ablauge reduziert werden. Dies wird nach dem Stand der Technik durch eine Reduktion des typischen Sulfidgehaltes in der verbrauchten Ablauge durch chemische Nassoxidation des Sulfides mit Sauerstoff in der Lösung erreicht.

Nach dem Stand der Technik sind verschiedene Verfahren zur Nassoxidation von verbrauchten Ablaugen bekannt (z.B. C.B. Maugans, C. Alice "wet air oxidation: a review of commercial sub-critical hydrothermal treatment" IT302 conference, 13-17/05/2002, New Orleans, Lousiana oder US-Patent US5082571); welche auf folgenden Allgemeinverfahren basieren.

Die verbrauchte Ablauge wird auf den gewünschten Reaktionsdruck gebracht und im Gegenstrom mit der oxidierten Ablauge angewärmt. Die erwärmte verbrauchte Ablauge wird anschließend unter Zufuhr von Sauerstoff in einen Oxidationsreaktor geführt und oxidiert. Der zur Reaktion benötigte Sauerstoff wird dabei entweder aus der Luft oder als reiner Sauerstoff zugefügt. Eine zusätzliche Anwärmung der verbrauchten Ablauge kann durch Einleitung von heißem Dampf in den Oxidationsreaktor vorgenommen werden. Nach einer typischen Verweildauer von ca. 1 Stunde (abhängig von der gewählten Temperatur und dem gewählten Druck) wird die oxidierte Ablauge mit dem zugehörigen Abgas über einen Wärmetauscher unter Erwärmung der verbrauchten Ablauge abgekühlt. Nach einer Druckkontrolle wird in einem anschließenden Abscheidebehälter das Abgas von der Flüssigkeit getrennt. Die flüssige oxidierte Ablauge kann danach unter optionaler Einstellung des pH-Werts (Neutralisation) in ein Verfahren zur biologischen Abwasseraufbereitung geführt werden.

Ein alternatives Verfahren wird in der DE102006030855 beschrieben. Nach dem in der DE102006030855 beschriebenen Verfahren wird die oxidierte Ablauge nach dem Oxidationsreaktor durch direkte Kühlung mit kalter oxidierter Ablauge aus dem Abscheidebehälter gekühlt. Die Einstellung der Reaktionstemperatur im Oxidationsreaktor erfolgt ohne Vorwärmung der verbrauchten Ablauge durch Zufuhr von heißem Dampf oder heißer Luft.

Die US 4,350,599 offenbart die Behandlung einer Ablauge mit Nassoxidation, bei welcher Kohlendioxid entsteht, welches rückgeführt wird, um die die Ablauge zu neutralisieren.

In dem Artikel "Wet Air Oxidation of Refinery Spent Caustic" von Claude E. Ellis, Environmental Progress, Band 17, Nr.1, 1998, Seiten 28-30 wird ein Verfahren zur Nassoxidation beschrieben, welches bei einer Temperatur von 120 °C bis 320 °C und einem Druck von 760 kPa bis 210 kPa stattfindet.

Der vorliegenden Erfindung liegt die Aufgabe zugrunde, ein alternatives Verfahren zur. Behandlung einer verbrauchten Ablauge aus einer Anlage zur Herstellung von Kohlenwasserstoffen mittels Spaltung eines kohlenwasserstoffhaltigen Einsatzes zu entwickeln. Dabei soll möglichst die Verweildauer im Oxidationsreaktor verkürzt, die Abwasserwerte der oxidierten Ablauge verbessert und/oder die Wirtschaftlichkeit des Verfahrens erhöht werden.

Die gestellte Aufgabe wird durch die kennzeichnenden Merkmale des Anspruches 1 gelöst. Vorteilhafte Ausgestaltungen der Erfindung werden in den Unteransprüchen angegeben.

Das Verfahren zur Oxidation wird in einem Reaktor unter einem Druck zwischen 60 bar und 200 bar durchgeführt. Durch den hohen Druck im Reaktor, speziell im genannten Druckbereich, wird die Oxidationsreaktion der Schwefelverbindungen in der verbrauchten Ablauge deutlich verbessert. Die Oxidation der schwefelhaltigen Verbindungen in der verbrauchten Ablauge erfolgt normalerweise in zwei verschiedenen Schritten. In einer schneller ablaufenden Reaktion werden als erstes aus den Sulfiden der verbrauchten Ablauge Thiosulfate gebildet. In einem weiteren Schritt werden diese Thiosulfate in stabilere Sulfate umgewandelt. Die Reaktion der Sulfide zu den Thiosulfate läuft dabei deutlich schneller ab als die Umwandlung der Thiosulfate zu Sulfaten. Die beiden wesentlichen Reaktionen (im Folgenden als Reaktion 1 und Reaktion 2 bezeichnet) sind im Einzelnen:
(1) 2 Na₂S + 2O₂ + H₂O <==> Na₂S₂O₃ + 2 NaOH
(2) Na₂S₂O₃ + 2 NaOH<==> 2 Na₂SO₄ + H₂O

Bei der Durchführung der Oxidationsreaktion in einem Druckbereich von beispielsweise 6 bis 10 bar und einer Verweilszeit im Oxidationsreaktor von 6 bis 8 Stunden bei 110°C bis 140°C wie im Stand der Technik verbleibt meist ein Rest von 20 bis 30 % von Thiosulfaten in der oxidierten Ablauge. Dieser Thiosulfatrest kann in der Regel von biologischen Abwasserbehandlungsverfahren problemlos mitverarbeitet werden. Durch die Durchführung des Verfahrens unter erhöhtem Druck in dem genannten Bereich wird der Reaktionsablauf der Reaktion 2 deutlich beschleunigt und der Thiosulfatanteil in der oxidierten Ablauge auf wenige ppm reduziert. Die Abwasserqualität und damit der chemische Sauerstoffbedarf der oxidierten Ablauge werden somit deutlich verbessert. Die anschließende biologische Abwasserbehandlung wird vereinfacht und ein Abwasser höherer Qualität gewonnen. Zusätzlich werden bei der Durchführung der Oxidationsreaktion in dem erhöhten Druckbereich zusätzliche Kohlenwasserstoffverunreinigungen in der verbrauchten Ablauge oxidiert. Dadurch sinkt der chemische Sauerstoffbedarf der oxidierten Ablauge weiter.

Daher lässt sich auch durch Durchführung der Oxidationsreaktion bei dem erhöhten Druck in dem genannten Bereich durch die beschleunigte Reaktion 2 die Verweilzeit der verbrauchten Ablauge im Oxidationsreaktor bei vergleichbarer Qualität der oxidierten Ablauge deutlich verkürzen. Dadurch wird die Wirtschaftlichkeit des Verfahrens erhöht.

In dem Verfahren wird der Druck der verbrauchten Ablauge in zwei getrennten-Druckstufen auf den Druck der Oxidationsreaktion erhöht. Erfindungsgemäß wird die verbrauchte Ablauge zwischen den beiden Druckstufen durch indirekten Wärmeaustausch mit der oxidierten Ablauge erwärmt, wobei die verbrauchte Ablauge nach der ersten Druckstufe und dem Wärmeaustausch mit der oxidierten Ablauge in einen Abscheider geführt wird, wo die Gasphase von der verbrauchten Ablauge abgetrennt wird.

Durch die erfindungsgemäße Erwärmung der verbrauchten Ablauge zwischen den beiden Druckstufen durch den indirekten Wärmetausch mit der oxidierten Ablauge werden sowohl die Investitionskosten als auch die Energiebilanz des Verfahrens verbessert. Die oxidierte Ablauge aus dem Oxidationsreaktor muss gekühlt werden, während die verbrauchte Ablauge vor dem Eintritt in den Oxidationsreaktor auf die Reaktionstemperatur angewärmt werden muss: Gemäß der Erfindung wird daher die thermische Energie der oxidierten Ablauge genutzt, um die verbrauchte Ablauge durch indirekten Wärmeaustausch anzuheizen. Weiterhin werden vorteilhafterweise die Investitionskosten minimiert. Die verbrauchte Ablauge ist agressiv. Daher muss der Wärmetauscher für die Anwärmung der verbrauchten Ablauge gegen die oxidierte Ablauge aus hochedlen Material ausgeführt werden. Gemäß der Erfindung wird der Wärmetauscher zwischen den beiden Druckstufen positioniert, daher muss er nur auf den Druck der ersten Druckstufe und nicht auf den deutlich höheren Druck der zweiten Druckstufe ausgelegt werden. Daher kann der Wärmetauscher mit deutlich geringeren Wandstärken ausgeführt werden, so dass Material eingespart und die Investitionskosten der Anlage verringert werden. Erst nach der Erwärmung auf die Reaktionstemperatur wird der Druck der verbrauchten Ablauge durch die zweite Druckstufe auf den Druck der Oxidationsreaktion eingestellt.

Weiterhin wird erfindungsgemäß die verbrauchte Ablauge dabei nach der ersten Druckstufe und dem Wärmeaustausch mit der oxidierten Ablauge in einen Abscheider geführt, wo die Gasphase der verbrauchten Ablauge abgetrennt wird. Durch die Positionierung eines Abscheiders nach dem Wärmetauscher kann die Menge an verbrauchter Ablauge im Oxidationsreaktor minimiert werden. Bei der Erwärmung in dem Wärmetauscher wird der Gasanteil in der verbrauchten Ablauge deutlich erhöht. Dieser Gasanteil kann in dem Abscheider gemäß der Erfindung von der flüssigen Phase der verbrauchten Ablauge abgetrennt werden. Der Gasanteil besteht dabei im Wesentlichen aus Wasserdampf und kann direkt ohne weitere Verfahrensschritte beispielsweise über eine Sauergasfackel in die Umwelt abgegeben werden oder als Prozessdampf oder Wärmeträger in einem anderen Teil der Anlage genutzt werden. Durch die Abscheidung zwischen den beiden Druckstufen wird die Ablauge somit aufkonzentriert. Das Volumen der Ablauge verringert sich und somit auch die Abwassermenge und das erforderliche Reaktorvolumen. Der Volumenstrom der verbrauchten Ablauge vor dem Oxidationsreaktor ist kleiner. Zusätzlich wird durch den Abscheider gewährleistet, dass eine gasfreie Flüssigphase als Einsatz in die zweite Druckstufe geführt wird.

Bevorzugt wird das Verfahren zur Oxidation bei einem Druck von 160 bar und einer Temperatur von 280 Grad° durchgeführt. In dieser Ausgestaltung der Erfindung ist die Wirtschaftlichkeit des Verfahrens durch die Kombination der Investitionskosten für den Oxidationsreaktor, der kürzeren Verweildauer der verbrauchten Ablauge im Oxidationsreaktor und der verbesserten Abwasserqualität der oxidierten Ablauge ideal.

Vorteilhafterweise wird der Reaktor zur Oxidation der verbrauchten Ablauge durch indirekten Wärmeaustausch von außen beheizt. Dabei wird zweckmäßigerweise Wasserdampf oder Öl als Heizmedium verwendet. Sowohl die indirekte Beheizung des Oxidationsreaktors als auch die beiden Heizmedium lassen sich mit jeder beschriebenen Ausgestaltung der Erfindung kombinieren.

Bei Beheizung des Oxidationsreaktors durch die Zufuhr von heißem Wasserdampf sind die Temperatur und vor allem die Druckbedingungen der Oxidationsreaktion limitiert. In einer Ethylenanlage liegt Wasserdampf zumeist mit einem Druck von ca. 100 bar vor, da dies in den meisten Anlagen die Grenze des Dampferzeugungssystems ist. Daher ist bei einer Beheizung des Oxidationsreaktors durch direkte Zufuhr von heißem Wasserdampf auf einen Druck von 100 bar limitiert, da der heiße Wasserdampf nicht in eine verbrauchte Ablauge oder einen Oxidationsreaktor mit höherem Druck injiziert werden kann. Die indirekte Beheizung des Reaktors vor außen ermöglicht so die Realisierung deutlich höherer Drücke.

Zusätzlich ergeben sich bei der Beheizung des Oxidationsreaktors mittels Dampfinjektion zwangsläufig Dampfverluste im Gesamtdampfsystem der Anlage. Der injizierte Wasserdampf verbleibt als Wasser oder als Dampfphase in der oxidierten Ablauge nach dem Oxidationsreaktor. Wasserdampf wird in der anschließenden Phasentrennung der oxidierten Ablauge mit der Gasphase zu einer Verbrennung (Laugenfackel) geführt, während der flüssige Anteil mit der oxidierten Lauge in das System zur biologischen Abwasseraufbereitung geführt wird. Auf diese Weise wird dem System / der Anlage beständig Dampf entzogen. Dies wird durch die indirekte Beheizung des Oxidationsreaktors vermieden. Zusätzlich wird durch die Vermeidung des direkten Einspritzens von Dampf in den Oxidationsreaktor die Abwassermenge nicht erhöht sondern minimiert.

Als ebenfalls vorteilhaft hat es sich erwiesen, der verbrauchten Ablauge bereits vor dem eigentlichen Reaktor zusätzlich Sauerstoff zuzuführen. Durch die zusätzliche Zufuhr von Sauerstoff vor dem eigentlichen Oxidationsreaktor wird schon vorher zumindest ein Teil der Sulfide oxidiert. Die Reaktion 1 unter Bildung des Thiosulfats läuft auch schon bei geringem Druck und niedriger Temperatur ab. Die schon vor dem Oxidationsreaktor gebildeten Reaktionsprodukt der Reaktion 1 können somit im Oxidationsreaktor direkt gemäß Reaktion 2 weiter reagieren. Da ein Teil der Reaktion in dieser Ausgestaltung der Erfindung schon vor dem eigentlichen Oxidationsreaktor stattfindet, muss in dieser Ausgestaltung der Erfindung auch eine geringere Menge Luft in den Oxidationsreaktor bzw. in die verbrauchte Lauge unter hohen Druck injiziert werden, wodurch die Betriebskosten gegenüber dem Stand der Technik weiter minimiert werden.

Bevorzugt wird der verbrauchten Ablauge direkt nach der ersten Druckstufe zusätzlich Sauerstoff zugeführt. In dieser Ausgestaltung der Erfindung ist der Sauerstoff lange in Kontakt mit der verbrauchten Ablauge und wird zusätzlich in der folgenden Wärmeaustauschstufe zusammen mit der verbrauchten Ablauge angewärmt. Überflüssiger Sauerstoff kann in dieser Ausgestaltung der Erfindung ebenfalls durch den Abscheider nach der Wärmeaustauscherstufe in die Atmosphäre entlassen werden.

Ebenso vorteilhaft ist die Zufuhr von Sauerstoff über eine Blasensäule vor dem Oxidationsreaktor. Die Blasensäule kann dabei vorteilhafterweise vor der ersten oder vor der zweiten Druckstufe positioniert werden. Bei der Verwendung einer Blasensäule in dieser Ausgestaltung der Erfindung wird die verbrauchte Ablauge in die Blasensäule geführt. In die Blasensäule wird von unten Sauerstoff zugeführt, welcher so die verbrauchte Ablauge in der Blasensäule durchperlt. Die Blasensäule ist dabei nicht vollständig mit verbrauchter Ablauge gefüllt, so dass der Raum oberhalb des Flüssigkeitsstands als Abscheideraum für die Gasphase wirkt, welche über den Kopf der Blasensäule abgezogen wird. Die Blasensäule kann dabei vorteilhafterweise vor oder nach der ersten Druckstufe positioniert werden. Bei einer Positionierung nach der ersten Druckstufe und nach dem Wärmetauscher kann in speziellen Ausgestaltungen der Erfindung die Blasensäule den Abscheider vor der zweiten Druckstufe ersetzen.

Es hat sich weiterhin als zweckmäßig erwiesen, den Sauerstoff im Gegenstrom zur verbrauchten Ablauge in den Oxidationsreaktor zu führen. Die Reaktion der Sulfide zu den Thiosulfaten läuft deutlich schneller als die Reaktion der Thiosulfate zu Sulfaten ab. In dieser Ausgestaltung der Erfindung wird somit die höchste Sauerstoffkonzentration am Ende des Oxidationsreaktors erreicht. So wird sichergestellt, dass alle in der oxidierten Ablauge verbliebenen Thiosulfate zu Sulfaten abreagiert können.

Die vorliegende Erfindung eignet sich besonders zur Behandlung einer verbrauchten Ablauge, wie sie in der Sauergaswäsche einer Ethylenanlage anfällt und hauptsächlich schwefelhaltige Verunreinigungen enthält.

Im Folgenden soll die Erfindung anhand des in der Figur dargestellten Ausführungsbeispieles näher erläuterter werden.

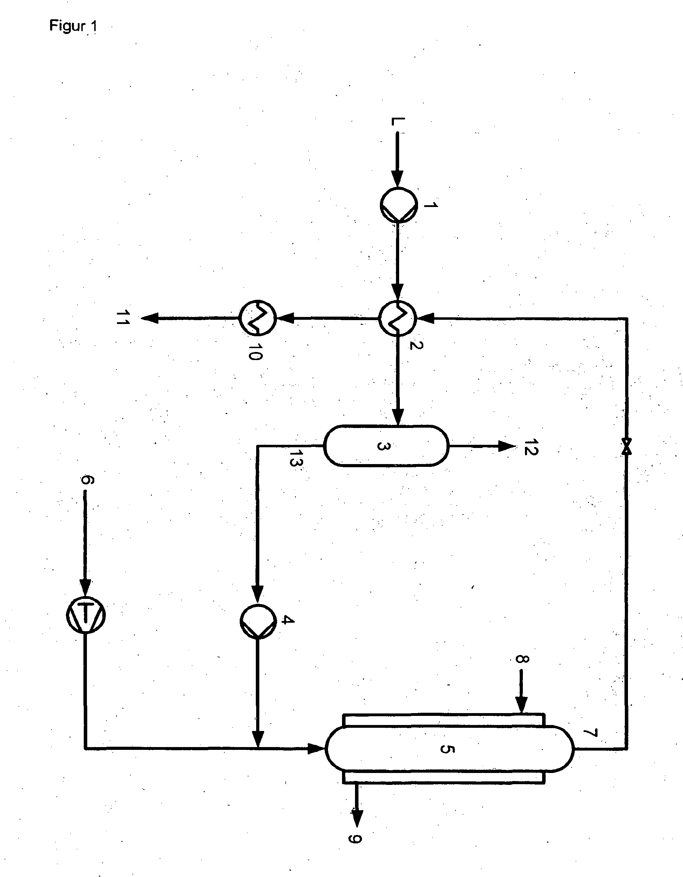

Es zeigt
- Figur 1: eine Ausgestaltung der Erfindung.

Gemäß der in der Figur dargestellten Ausgestaltung der Erfindung wird der Druck der verbrauchte Ablauge L in einer ersten Druckstufe 1 erhöht. Im anschließenden Wärmetauscher 2 wird die verbrauchte Ablauge durch indirekten Wärmeaustausch mit der oxidierten Ablauge 7 angewärmt. Die oxidierte Ablauge 7 wird dabei abgekühlt. Der Wärmetauscher 2 ist dabei als Gegenstromwärmetauscher ausgeführt. Die angewärmte verbrauchte Ablauge wird vom Wärmetauscher 2 in einen Abscheider 3 geführt. Im Abscheider 3 wird die verdampfte wässrige Phase von der verbrauchten Ablauge abgezogen und als Gasphase 12 entweder in die Atmosphäre entlassen oder als Prozessdampf oder Wärmeträger in der Anlage verwendet. Die flüssige Phase 13 der verbrauchten Ablauge wird in einer zweiten Druckstufe 4 auf den gewünschten Reaktionsdruck eingestellt, und zusammen mit komprimierter Luft 6 in den Oxidationsreaktor 5 geführt. Im Oxidationsreaktor 5 wird die verbrauchte Ablauge oxidiert. Im Oxidationsreaktor 5 laufen dabei sowohl Reaktion 1 als auch Reaktion 2 ab. Die oxidierte Ablauge 7 enthält daher weder Sulfide noch Thiosulfate. Der Oxidationsreaktor 5 wird dabei von außen durch indirekten Wärmeaustausch mit Hochdruckdampf 8 beheizt. Der kondensierte Hochdruckdampf 8 wird am Boden des Reaktors als Kondensat 9 abgezogen und in das Kondensatsystem zurückgeführt. Die oxidierte Ablauge 7 wird zweistufig einmal im Gegenstrom im Wärmetauscher 2 im Wärmeaustausch mit der verbrauchten Ablauge L und zum anderen im Wärmetauscher 10 im Gegenstrom mit Kühlwasser abgekühlt. Die oxidierte Ablauge 7 kann nach der Abkühlung über eine optionale Neutralisation (nicht dargestellt) unter Abscheidung der Gasphase (nicht dargestellt) direkt in ein Verfahren zur biologischen Abwasseraufbereitung geführt werden 11.

## Patentansprüche

1. Verfahren zur Behandlung einer verbrauchten Ablauge (L) aus einer Anlage zur Herstellung von Kohlenwasserstoffen mittels Spaltung eines Kohlenwasserstoffhaltigen Einsatzes, wobei das Verfahren mindestens einen Schritt aufweist, bei dem die verbrauchte Ablauge (L) unter erhöhter Temperatur bei überatmosphärischen Druck einer Oxidation mit Sauerstoff unterzogen wird, wobei das Verfahren zur Oxidation in einem Reaktor (5) unter einem Druck zwischen 60 bar und 200 bar durchgeführt wird, und wobei der Druck der verbrauchten Ablauge in zwei getrennten Druckstufen (1, 4) auf den Druck der Oxidationsreaktion erhöht wird, **dadurch gekennzeichnet, dass** die verbrauchte Ablauge (L) zwischen den beiden Druckstufen (1, 4) durch indirekten Wärmeaustausch (2) mit der oxidierten Ablauge (7) erwärmt wird und wobei die verbrauchte Ablauge (L) nach der ersten Druckstufe (1) und dem Wärmeaustausch (2) mit der oxidierten Ablauge (7) in einen Abscheider (3) geführt wird, wo die Gasphase (12) von der verbrauchten Ablauge (13) abgetrennt wird.

2. Verfahren nach Anspruch 1, **dadurch gekennzeichnet, dass** das Verfahren zur Oxidation bei einem Druck von 160 bar und einer Temperatur von 280°C durchgeführt wird.

3. Verfahren nach einem der Ansprüche 1 bis 2, **dadurch gekennzeichnet, dass** der verbrauchten Ablauge bereits vor dem eigentlichen Reaktor zusätzlich Sauerstoff (6) zugeführt wird.

4. Verfahren nach einem der Ansprüche 1 bis 3, **dadurch gekennzeichnet, dass** der verbrauchten Ablauge direkt nach der ersten Druckstufe zusätzlich Sauerstoff zugeführt wird.

5. Verfahren nach einem der Ansprüche 1 bis 4, **dadurch gekennzeichnet, dass** der Sauerstoff über eine Blasensäule der verbrauchten Ablauge zugeführt wird.

6. Verfahren nach einem der Ansprüche 1 bis 5, **dadurch gekennzeichnet, dass** der Sauerstoff im Gegenstrom zur verbrauchten Ablauge in den Oxidationsreaktor (5) geführt wird.

7. Verfahren nach einem der Ansprüche 1 bis 6, **dadurch gekennzeichnet, dass** die verbrauchte Ablauge (L) in der Sauergaswäsche einer Ethylenanlage anfällt und hauptsächlich schwefelhaltige Verunreinigungen enthält.

## Claims

1. Process for the treatment of a used waste alkali (L) from a plant for preparing hydrocarbons by cracking of a hydrocarbon-containing feed, where the process has at least one step in which the used waste alkali (L) is subjected to an oxidation by means of oxygen at elevated temperature under superatmospheric pressure, the process for the oxidation is carried out in a reactor (5) under a pressure in the range from 60 bar to 200 bar and the pressure of the used waste alkali is increased to the pressure of the oxidation reaction in two separate pressure stages (1, 4), **characterized in that** the used waste alkali (L) is heated by indirect heat exchange (2) with the oxidized waste alkali (7) between the two pressure stages (1, 4) and the used waste alkali (L) after the first pressure stage (1) and heat exchange (2) with the oxidized waste alkali (7) is fed to a separator (3) where the gas phase (12) is separated off from the used waste alkali (13).

2. Process according to Claim 1, **characterized in that** the process for the oxidation is carried out at a pressure of 160 bar and a temperature of 280°C.

3. Process according to any of Claims 1 to 2, **characterized in that** oxygen (6) is additionally introduced into the used waste alkali upstream of the actual reactor.

4. Process according to any of Claims 1 to 3, **characterized in ..that** oxygen is additionally introduced into the used waste alkali directly after the first pressure stage.

5. Process according to any of Claims 1 to 4, **characterised in that** the oxygen is introduced into the used waste alkali via a bubble column.

6. Process according to any of Claims 1 to 5, **characterized in that** the -oxygen is introduced into the Oxidation reactor (5) in countercurrent to the used waste alkali.

7. Process according to any of Claims 1 to 6, **characterized in that** the used waste alkali (L) is obtained in the acidic gas scrub of an ethylene plant and contains mainly sulphur-containing impurities.

## Revendications

1. Procédé pour le traitement d'une lessive usée (L) provenant d'une .installation pour la production d'hydrocarbures par craquage d'une charge contenant des hydrocarbures, dans lequel le procédé comprend au moins une étape dans laquelle la lessive usée (L) est soumise à une oxydation avec de l'oxygène à une température accrue et sous une pression super-atmosphérique, dans lequel le procédé d'oxydation est exécuté dans un réacteur (5) sous une pression comprise entre 60 bar et 200 bar .et dans lequel la pression de la lessive usée est accrue en deux étages de pression séparés (1, 4) jusqu'à la pression -de la réaction d'oxydation, **caractérisé en ce que** l'on chauffe la lessive usée (L) entre les deux étages de pression (1, 4) par échange de chaleur indirect (2) avec la lessive oxydée (7) et dans lequel on conduit la lessive usée (L) après le premier étage de pression (1) et l'échange de chaleur (2) avec la lessive oxydée (7) dans un séparateur (3), où la phase gazeuse (12) est séparée de la lessive usée (13).

2. Procédé selon la revendication 1, **caractérisé en ce que** l'on exécute le procédé d'oxydation sous une pression de 160 bar et à une température de 280°C.

3. Procédé selon l'une des revendications 1 à 2, **caractérisé en ce que** l'on ajoute en plus de l'oxygène (6) à la lessive usée déjà avant le réacteur lui-même.

4. Procédé selon l'une quelconque des revendications 1 à 3, .**caractérisé en ce que** l'on ajoute en plus de l'oxygène à la lessive usée directement après le premier étage de pression.

5. Procédé selon l'une quelconque des revendications 1 à 4, **caractérisé en ce que** l'on ajoute l'oxygène à la lessive usée au moyen d'une colonne à bulles.

6. Procédé selon l'une quelconque des revendications 1 à 5, **caractérisé en ce que** l'on amène l'oxygène dans le réacteur d'oxydation (5) à contre-courant avec la lessive usée.

7. Procédé selon l'une quelconque des revendications 1 à 6, **caractérisé en ce que** la lessive usée (L) est produite dans le lavage au gaz acide d'une installation d'éthylène et contient principalement des impuretés contenant du soufre.
